# EUROPEAN PATENT APPLICATION

(11) **EP 4 092 516 A1**
(43) Date of publication of application: **23.11.2022**
(21) Application number: 21871179.4
(22) Date of filing: 24.08.2021
(51) Int. Cl.: G06F 3/0488

(54) **FALSE TOUCH REJECTION METHOD, TERMINAL DEVICE, AND STORAGE MEDIUM**

(30) Priority: 27.09.2020 CN 202011036190
(71) Applicant: ZTE Corporation, Shenzhen, Guangdong 518057 (CN)
(72) Inventor: SUN, Changqing, Shenzhen, Guangdong 518057 (CN)
(74) Representative: Bals & Vogel Patentanwälte PartGmbB
(86) International application number: PCT/CN2021/114340
(87) International publication number: WO 2022/062806

(57) **Abstract**

A false touch rejection method, a terminal device, and a storage medium. The method comprises: monitoring a multi-touch operation received on a display apparatus (S101); determining whether there are a first touch operation in an inactive input area of the display apparatus and a second touch operation in an active input area of the display apparatus in the multi-touch operation (S102); and when there are the first touch operation and the second touch operation in the multi-touch operation, discarding the first touch operation, and in response to the second touch operation, controlling a terminal device to execute a corresponding action (S103). A terminal device can be prevented from executing a false touch operation, and can also respond to a non-false touch operation.

## Description

### CROSS-REFERENCE TO RELATED APPLICATION

The present application is filed on the basis of Chinese patent application No. 202011036190.4 filed September 27, 2020, and claims priority to the Chinese patent application, the entire contents of which are incorporated herein by reference.

### TECHNICAL FIELD

The present application relates to the technical field of terminal devices, and more particularly, to an accidental-touch prevention method, a terminal device and a storage medium.

### BACKGROUND

Currently, a user interacts with a terminal device mainly through touch. However, as the size of a terminal becomes larger and a frame becomes narrower, it is inevitable that there may be an accidental operation when the user holds the terminal. Especially in the case of one-hand holding for operation, a palm is more likely to contact with a screen, resulting in a problem of accidental touch or no response of a real operating point, which brings great inconvenience to the user.

### SUMMARY

Embodiments of the present application provide an accidental-touch prevention method, a terminal device and a storage medium.

In accordance with an aspect of the present application, an embodiment provides an accidental-touch prevention method which is applied to a terminal device including a display apparatus. The method includes: monitoring a multi-touch operation received on the display apparatus; determining whether there is a first touch operation in an invalid input area of the display apparatus and a second touch operation in a valid input area of the display apparatus in the multi-touch operation; in response that there is the first touch operation and the second touch operation in the multi-touch operation, discarding the first touch operation, and in response to the second touch operation, controlling the terminal device to execute a corresponding action.

In accordance with an aspect of the present application, an embodiment further provides a terminal device, including a display apparatus, a processor, a memory, a computer program stored in the memory and executable by the processor, and a data bus configured to implement connection communication between the processor and the memory, where the computer program, when executed by the processor, causes the processor to carry out any one of the accidental-touch prevention methods provided in the Description of the present application.

In accordance with an aspect of the present application, an embodiment further provides a storage medium configured for a computer readable storage and storing one or more programs which, when executed by one or more processors, cause the one or more processors to carry out any one of the accidental-touch prevention methods provided in the Description of the present application.

### BRIEF DESCRIPTION OF DRAWINGS

Fig. 1 is a flowchart of an accidental-touch prevention method provided by an embodiment of the present application;
Fig. 2 is a schematic diagram of a scenario in which an invalid input area and a valid input area are established when a user holds a terminal device with his/her right hand when the terminal device is in a portrait display mode in an embodiment of the present application;
Fig. 3 is a schematic diagram of a scenario in which an invalid input area and a valid input area are established when a user holds a terminal device with his/her left hand when the terminal device is in a portrait display mode in an embodiment of the present application;
Fig. 4 is a schematic diagram of a scenario in which an invalid input area and a valid input area are established when a user holds a terminal device with his/her left hand when the terminal device is in a landscape display mode in an embodiment of the present application;
Fig. 5 is a schematic diagram of a scenario in which an invalid input area and a valid input area are established when a user holds a terminal device with his/her right hand when the terminal device is in a landscape display mode in an embodiment of the present application;
Fig. 6 is a schematic diagram of a scenario in which an invalid input area and a valid input area are established when a user holds a terminal device with both hands when the terminal device is in a portrait display mode in an embodiment of the present application;
Fig. 7 is a schematic diagram of a scenario in which an invalid input area and a valid input area are established when a user holds a terminal device with both hands when the terminal device is in a landscape display mode in an embodiment of the present application;
Fig. 8 is a flowchart of sub-steps of the accidental-touch prevention method in Fig. 1; and
Fig. 9 is a schematic block diagram of a structure of a terminal device provided by an embodiment of the present application.

### DETAILED DESCRIPTION

The technical scheme in the embodiments of the present application will be described clearly and completely below in combination with the drawings in the embodiments of the present application. Apparently, the described embodiments are only a part of the embodiments of the present application, but not all of the embodiments. Based on the embodiments of the present application, all other embodiments obtained by those having ordinary skill in the art without contributing creative labor belong to the protection scope of the present application.

The flowchart shown in the figure is for illustration only, and does not necessarily include all contents and operations/steps, nor to execute them in the described order. For example, some operations/steps can be decomposed, combined or partially merged, so the actual execution order may change according to the actual situation.

It will be understood that the terminology used in the Description of the present application is for the purpose of describing particular embodiments only and is not intended to limit the present application. As used in the Description and the appended claims of the present application, the singular forms "a", "an" and "the" are intended to include the plural forms as well, unless the context clearly indicates otherwise.

Embodiments of the present application provide an accidental-touch prevention method, a terminal device and a storage medium. The accidental-touch prevention method may be applied to terminal devices such as mobile phones, tablet computers, touch-screen notebook computers, touch-screen refrigerators, touch-screen wearable devices and the like.

With reference to the following drawings, some implementations of the present application will be described in detail. The following embodiments and the features in the embodiments may be combined with each other without conflict.

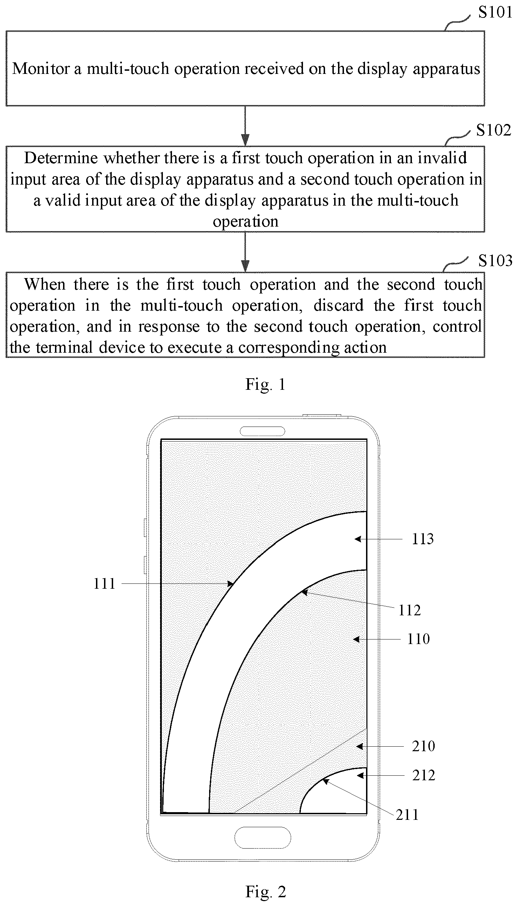

Referring to Fig. 1, which is a flowchart of an accidental-touch prevention method provided by an embodiment of the present application.

As shown in Fig. 1, the accidental-touch prevention method may include steps of S101 to S103.

At S101, a multi-touch operation received on a display apparatus is monitored.

The terminal device may include a display apparatus configured to display a screen or interface of the terminal device. The display apparatus may be a touchscreen, and the type of the touchscreen may be selected according to an actual situation, which is not specifically limited in the present application. For example, the touchscreen may be a capacitive touchscreen or a resistive touchscreen. The multi-touch operation is a touch action with multiple touch points made by a user on the display apparatus, and the touch action may be clicking on the display or sliding on the display apparatus. For example, the touch operation made by the user on the display apparatus is a one-click touch operation, a double-click multi-touch operation, a long-press touch operation, a sliding operation or the like.

In an embodiment, a mode of monitoring the multi-touch operation received on the display apparatus may be as follows: monitoring a touch operation received on the display apparatus, and determining a number of touch points of the touch operation on the display apparatus; and if the number of the touch points of the touch operation on the display apparatus is greater than or equal to a preset number, determining that the touch operation received on the display apparatus is a multi-touch operation. The preset number may be set according to an actual situation, which is not specifically limited in the embodiment of the present application. For example, the preset number may be set to 3.

At S102, whether there is a first touch operation in an invalid input area of the display apparatus and a second touch operation in a valid input area of the display apparatus in the multi-touch operation are determined.

In some examples, position information of touch points on the display apparatus of the multi-touch operation is acquired. According to the position information, whether there is a first touch operation in an invalid input area of the display apparatus and a second touch operation in a valid input area of the display apparatus in the multi-touch operation is determined, that is, according to the position information, whether there are touch points in both the invalid input area of the display apparatus and the valid input area of the display apparatus is determined. If there are touch points in both the invalid input area of the display apparatus and the valid input area of the display apparatus, it is determined that there is the first touch operation and the second touch operation in the multi-touch operation. According to the position information, whether there is a first touch operation in an accidental touch area of the display apparatus and a second touch operation in a valid input area of the display apparatus in the multi-touch operation can be accurately known.

In an embodiment, a mode of determining whether there are touch points in both the invalid input area of the display apparatus and the valid input area of the display apparatus may be as follows: acquiring a position coordinate range of the invalid input area of the display apparatus and a position coordinate range of the valid input area of the display apparatus, determining whether there are position coordinates of touch points in the position coordinate range of the invalid input area and whether there are coordinates of touch points in the position coordinate range of the valid input area; and if there are position coordinates of touch points in the position coordinate range of the invalid input area and there are coordinates of touch points in the position coordinate range of the valid input area, determining that there is the first touch operation and the second touch operation in the multi-touch operation.

In an embodiment, a mode of establishing the invalid input area and the valid input area of the display apparatus may be as follows: acquiring touch habit data of a user, where the touch habit data includes the position information of the touch points on the display apparatus of the multi-touch operation input by the user for many times; and according to the touch habit data, establishing an invalid input area and a valid input area of the display apparatus. According to the touch habit data of the user, the invalid input area and the valid input area of the display apparatus meeting a touch habit of the user can be accurately established, so the accidental-touch prevention performance of the terminal device can be further improved.

In an embodiment, a mode of establishing the valid input area of the display apparatus according to the touch habit data may be as follows: determining a reference touch point, acquiring a target position coordinate of the reference touch point, and acquiring position coordinates of touch points in a preset valid input area of the display apparatus from the touch habit data; determining a distance between each touch point and the reference touch point according to the target position coordinate and the position coordinates of the touch points in the preset valid input area; determining a first preset number of first touch points and a second preset number of second touch points according to the distance between each touch point in the preset valid input area and the reference touch point, where a distance between the first touch point and the reference touch point is larger than a distance between the second touch point and the reference touch point; according to position coordinates of the first preset number of first touch points, generating a first trajectory which is the farthest touchable when a user holds the terminal device, where at least half of the first preset number of first touch points are located on the first trajectory; according to position coordinates of the second preset number of second touch points, generating a second trajectory which is the nearest touchable when the user holds the terminal device, where at least half of the second preset number of second touch points are located on the second trajectory; and determining an annular area formed between the first trajectory and the second trajectory as the valid input area of the display apparatus. It can be understood that the first preset number and the second preset number may be set based on an actual situation, which is not specifically limited in this embodiment. The first trajectory, and the second trajectory may be determined according to an actual situation, which is not specifically limited in the embodiment of the present application. For example, the first trajectory and the second trajectory may be annular trajectories, straight trajectories, curved trajectories or the like.

In an embodiment, a mode of determining the first preset number of first touch points and the second preset number of second touch points according to a distance between each touch point in the preset valid input area and the reference touch point may be as follows: according to an order of distances between all touch points in the preset valid input area and the reference touch point, ranking all touch points in the preset valid input area to obtain a touch point queue; sequentially acquiring touch points from the touch point queue as first touch points until a number of the first touch points reaches a first preset number, and sequentially acquiring touch points from the touch point queue as second touch points in a reverse sequence until a number of the second touch points reaches a second preset number, and the first touch points are different from the second touch points.

In an embodiment, a mode of establishing the invalid input area of the display apparatus according to the touch habit data may be as follows: determining a reference touch point, acquiring a target position coordinate of the reference touch point, and acquiring position coordinates of third touch points in the preset invalid input area of the display apparatus from the touch habit data; according to the position coordinate of each third touch point, generating a third trajectory for the user to touch the preset invalid input area, where at least half of the third touch points are located on the third trajectory; and determining a sector area formed by the third trajectory and each side of a frame of the terminal device as the invalid input area of the display apparatus. The third trajectory may be determined according to an actual situation, which is not specifically limited in the embodiment of the present application. For example, the third trajectory may be an annular trajectory, a straight trajectory, a curved trajectory or the like.

In an embodiment, the touch habit data includes operating state information of the terminal device and position information of the touch points on the display apparatus of the multi-touch operation input by the user for many times. A mode of establishing the invalid input area and the valid input area of the display apparatus according to the touch habit data may be as follows: according to the operating state information of the terminal device and the position information of the touch points on the display apparatus of the multi-touch operation input by the user for many times, establishing the invalid input area and the valid input area corresponding to the operating state information. The operating state information includes at least one of a holding mode in which the user holds the terminal device, an operating time period, an operating application of the terminal device, a display mode of the display apparatus or a display page. The holding mode includes a one-hand holding mode or a two-hand holding mode. The display mode includes a landscape display mode and portrait display mode. Adaptive invalid input areas and valid input areas are established for holding modes for the user to hold the terminal device, operating time periods, different applications and different display pages to improve the accidental-touch prevention performance.

In an embodiment, a mode of establishing the invalid input area and the valid input area corresponding to the operating state information of the terminal device according to the operating state information of the terminal device and the position information of the touch points on the display apparatus of multi-touch operation input by the user for many times may be as follows: acquiring first position information of touch points on the display apparatus of the multi-touch operation input by the user for many times when holding the terminal device with one hand, and establishing an invalid input area and a valid input area of the display apparatus when the user holds the terminal device with one hand according to the first position information; and/or acquiring second position information of touch points on the display apparatus of the multi-touch operation input by the user for many times when holding the terminal device with both hands, and establishing an invalid input area and an valid input area of the display apparatus when the user holds the terminal device with both hands according to the second position information. The operating state information may correspond to one or more invalid input areas and one or more valid input areas. For example, at least one of a holding mode in which the user holds the terminal device, an operating time period, an operating application of the terminal device, a display mode of the display apparatus and a display page corresponds to one or more invalid input areas and one or more valid input areas.

In an embodiment, a mode of establishing the valid input area of the display apparatus when the user holds the terminal device with one hand according to the first position information may be as follows: determining a reference touch point, acquiring a target position coordinate of the reference touch point, and acquiring position coordinates of touch points in a preset valid input area of the display apparatus from the first position information; determining a distance between each touch point and the reference touch point according to the target position coordinate and the position coordinates of the touch points in the preset valid input area; determining a first preset number of first touch points and a second preset number of second touch points according to the distance between each touch point in the preset valid input area and the reference touch point, where a distance between the first touch point and the reference touch point is larger than a distance between the second touch point and the reference touch point; according to the position coordinates of the first preset number of first touch points, generating a first trajectory which is the farthest touchable when a user holds the terminal device, where at least half of the first preset number of first touch points are located on the first trajectory; according to the position coordinates of the second preset number of second touch points, generating a second trajectory which is the nearest touchable when the user holds the terminal device, where at least half of the second preset number of second touch points are located on the second trajectory; and determining an annular area formed between the first trajectory and the second trajectory as the valid input area of the display apparatus when the user holds the terminal device with one hand. The first trajectory and the second trajectory may be determined according to an actual situation, which is not specifically limited in the embodiment of the present application. For example, the first trajectory and the second trajectory may be annular trajectories, straight trajectories, curved trajectories or the like.

In an embodiment, a mode of establishing the invalid input area of the display apparatus when the user holds the terminal device with one hand according to the position information of the touch points on the display apparatus of the multi-touch operation input by the user for many times when holding the terminal device with one hand may be as follows: determining a reference touch point, acquiring a target position coordinate of the reference touch point, and acquiring position coordinates of third touch points in the preset invalid input area of the display apparatus from the first position information; according to the position coordinate of each third touch point, generating a third trajectory for the user to touch the preset invalid input area, where at least half of the third touch points are located on the third trajectory; and determining a sector area formed by the third trajectory and each side of the frame of the terminal device as the invalid input area of the display apparatus when the user holds the terminal device with one hand. The third trajectory may be determined according to an actual situation, which is not specifically limited in the embodiment of the present application. For example, the third trajectory may be an annular trajectory, a straight trajectory, a curved trajectory or the like.

In some examples, as shown in Fig. 2, the terminal device is in a portrait display mode. The preset valid input area and the preset invalid input area of the display apparatus are area 110 and area 210 in Fig. 2, respectively. The first trajectory is trajectory 111 and the second trajectory is trajectory 112, and the annular area formed between the first trajectory and the second trajectory is area 113. Therefore, the valid input area when the user holds the terminal device with his/her right hand is area 113, the third trajectory is the trajectory 211, and the sector area formed by the third trajectory and each side of the frame of the terminal device is the area 212. Therefore, the area 212 is the invalid input area when the user holds the terminal device with his/her right hand.

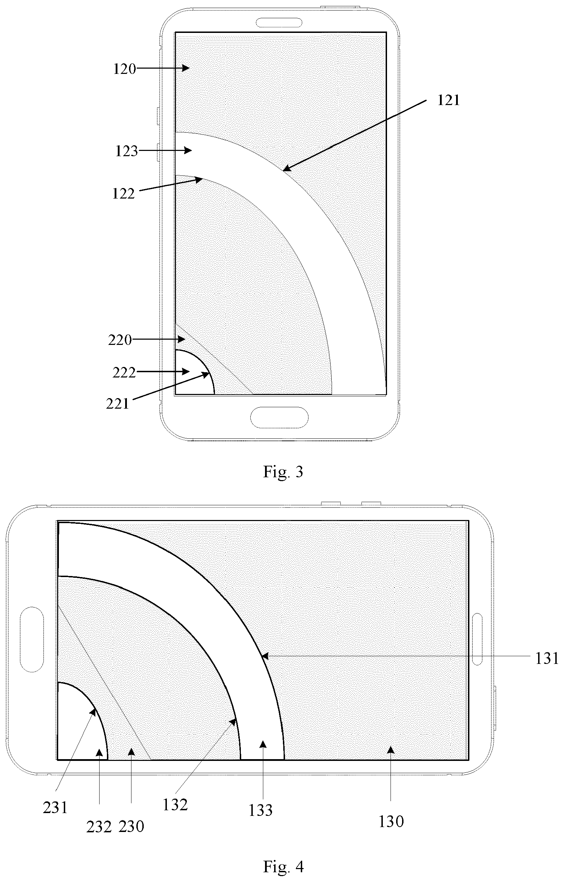

In some examples, as shown in Fig. 3, the terminal device is in a portrait display mode. The preset valid input area and the preset invalid input area of the display apparatus are area 120 and area 220 in Fig. 3, respectively. The first trajectory is trajectory 121, the second trajectory is trajectory 122, and the annular area formed between the first trajectory and the second trajectory is area 123. Therefore, the valid input area when the user holds the terminal device with his/her left hand is area 123, the third trajectory is the trajectory 221, and the sector area formed by the third trajectory and each side of the frame of the terminal device is area 222. Therefore, the area 222 is the invalid input area when the user holds the terminal device with his/her left hand.

In some examples, as shown in Fig. 4, the terminal device is in a landscape display mode. The preset valid input area and the preset invalid input area of the display apparatus are area 130 and area 230 in Fig. 4, respectively. The first trajectory is trajectory 131, the second trajectory is trajectory 132, and the annular area formed between the first trajectory and the second trajectory is area 133. Therefore, the valid input area when the user holds the terminal device with his/her left hand is area 133, the third trajectory is the trajectory 231, and the sector area formed by the third trajectory and each side of the frame of the terminal device is area 232. Therefore, the area 232 is the invalid input area when the user holds the terminal device with his/her left hand.

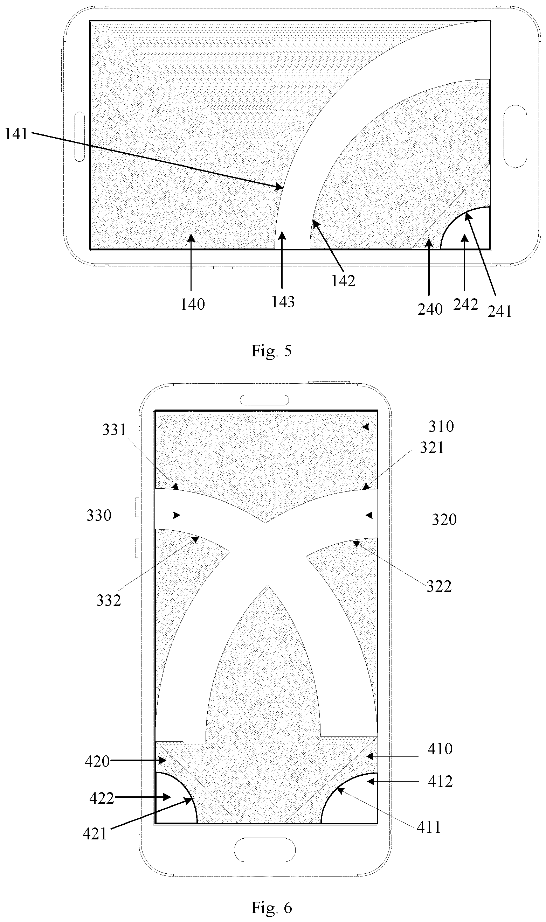

In some examples, as shown in Fig. 5, the terminal device is in a landscape display mode. The preset valid input area and the preset invalid input area of the display apparatus are area 140 and area 240 in Fig. 5, respectively. The first trajectory is trajectory 141, the second trajectory is trajectory 142, and the annular area formed between the first trajectory and the second trajectory is area 143. Therefore, the valid input area when the user holds the terminal device with his/her right hand is area 143, the third trajectory is the trajectory 241, and the sector area formed by the third trajectory and each side of the frame of the terminal device is the area 242. Therefore, the area 242 is the invalid input area when the user holds the terminal device with his/her right hand.

The reference touch point may be any one of touch points corresponding to four corners of the terminal device, and the reference touch point may be determined according to the holding mode in which the user holds the terminal device. For example, if the holding mode in which the user holds the terminal device is a right-hand holding mode, the reference touch point is a touch point corresponding to a right corner of the terminal device. For another example, if the holding mode in which the user holds the terminal device is a left-hand holding mode, the reference touch point is a touch point corresponding to a left corner of the terminal device. For another example, if the holding mode in which the user holds the terminal device is a two-hand holding mode, the reference touch point includes a first reference touch point and a second reference touch point, where the first reference touch point is a touch point corresponding to the right corner of the terminal device, and the second reference touch point is a touch point corresponding to the left corner of the terminal device.

In an embodiment, a mode of establishing the invalid input area and the valid input area of the display apparatus when the user holds the terminal device with both hands according to the second position information may be as follows: determining a first reference touch point and a second reference touch point, and acquiring position coordinates of the first reference touch point and the second reference touch point; determining a distance between each touch point in the preset valid input area and the first reference touch point according to the position coordinate of each touch point in the preset valid input area in the second position information and the position coordinates of the first reference touch point; determining a plurality of third touch points and a plurality of fourth touch points according to the distance between each touch point in the preset valid input area and the first reference touch point, where a distance between the third touch point and the first reference touch point is larger than a distance between the fourth touch point and the first reference touch point; generating a fourth trajectory according to the position coordinate of each third touch point, and generating a fifth trajectory according to the position coordinate of each fourth touch point. The fourth trajectory and the fifth trajectory may be determined according to an actual situation, which is not specifically limited in the embodiment of the present application. For example, the fourth trajectory and the fifth trajectory may be annular trajectories, straight trajectories, curved trajectories or the like.

The mode further includes: determining a distance between each touch point in the preset valid input area and the second reference touch point according to the position coordinate of each touch point in the preset valid input area in the second position information and the position coordinates of the second reference touch point; determining a plurality of fifth touch points and a plurality of sixth touch points according to the distance between each touch point in a preset valid input area and a second reference touch point, where a distance between each fifth touch point and the second reference touch point is larger than a distance between each sixth touch point and the second reference touch point; generating a sixth trajectory according to the position coordinate of each fifth touch point, and generating a seventh trajectory according to the position coordinate of each sixth touch point.

Then, the mode further includes: taking an annular area between the fourth trajectory and the fifth trajectory as a first valid input area of the display apparatus when the user holds the terminal device with both hands, and taking an annular area between the sixth trajectory and the seventh trajectory as a second valid input area of the display apparatus when the user holds the terminal device with both hands; generating an eighth trajectory according to the position coordinate of each touch point in the first preset invalid input area in the second position information, and determining a sector area formed by the eighth trajectory and each side of the frame of the terminal device as a first invalid input area of the display apparatus when the user holds the terminal device with both hands; generating a ninth trajectory according to the position coordinate of each touch point in the second preset invalid input area in the second position information, and determining a sector area formed by the ninth trajectory and each side of the frame of the terminal device as a second invalid input area of the display apparatus when the user holds the terminal device with both hands. The sixth trajectory, the seventh trajectory, the eighth trajectory, and the ninth trajectory may be determined according to an actual situation, which is not specifically limited in the embodiment of the present application. For example, the sixth trajectory, the seventh trajectory, the eighth trajectory, and the ninth trajectory may be annular trajectories, straight trajectories, curved trajectories or the like.

In some examples, as shown in Fig. 6, the display mode of the terminal device is in a portrait display mode. The preset valid input area, the first preset invalid input area and the second preset invalid input area of the display apparatus are area 310, area 410 and area 420 in Fig. 6, respectively. The fourth trajectory is trajectory 321, and the fifth trajectory is trajectory 322. Therefore, the first annular area of the valid input area of the display apparatus is annular area 320 when the user holds the terminal device with both hands. The sixth trajectory is trajectory 331, and the seventh trajectory is trajectory 332. Therefore, the second annular area of the valid input area of the display apparatus when the user holds the terminal device with both hands is annular area 330. The eighth trajectory is trajectory 411, and the first invalid input area of the display apparatus when the user holds the terminal device with both hands is sector area 412. The ninth trajectory is trajectory 421, and the second invalid input area of the display apparatus when the user holds the terminal device with both hands is sector area 422.

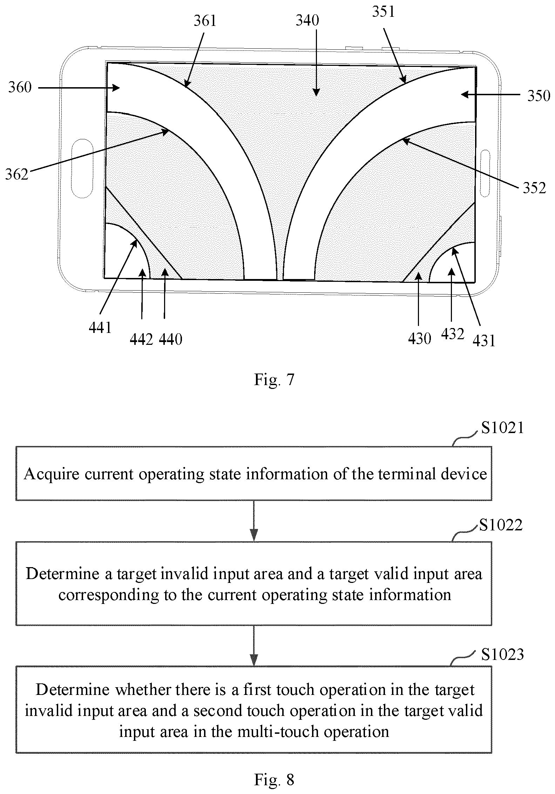

In some examples, as shown in Fig. 7, the terminal device is in a landscape display mode. The preset valid input area, the first preset invalid input area and the second preset invalid input area of the display apparatus are area 340, area 430 and area 440 in Fig. 7 respectively, the fourth trajectory is trajectory 351, and the fifth trajectory is trajectory 352. Therefore, the first annular area of the valid input area of the display apparatus when the user holds the terminal device with both hands is annular area 350, the sixth trajectory is trajectory 361, and the seventh trajectory is trajectory 362. Therefore, the second annular area of the valid input area of the display apparatus when the user holds the terminal device with both hands is annular area 360. The eighth trajectory is trajectory 431, and the first invalid input area of the display apparatus when the user holds the terminal device with both hands is sector area 432. The ninth trajectory is trajectory 441, and the second invalid input area of the display apparatus when the user holds the terminal device with both hands is sector area 442.

It can be understood that a specific process of establishing the invalid input area and the valid input area of the display apparatus according to the operating time period, the operating application of the terminal device, the display mode and the display page of the display apparatus may refer to the corresponding description in the previous embodiments, which will not be repeated here.

In an embodiment, a mode of establishing the invalid input area and the valid input area of the display apparatus may also be as follows: displaying a guide page, where the guide page is configured to guide a user to establish the invalid input area and the valid input area of the display apparatus, and the guide page includes a preset invalid input area and a preset valid input area of the display apparatus; when the user chooses to establish the invalid input area and the valid input area of one-hand holding mode of the user while the display mode of the terminal device is portrait display mode, setting a plurality of guide points in the preset valid input area to guide the user to touch the guide points, then recording a plurality of guide points which are the farthest touchable when the user holds the terminal device with one hand, and recording a plurality of guide points which are the nearest touchable when the user holds the terminal device with one hand, and meanwhile, recording a plurality of accidental touch points of a palm of the user in the preset invalid input area when the user touches the guide points; according to position coordinates of the plurality of guiding points which are farthest touchable when the user holds the terminal device with one hand, generating a first target trajectory which is farthest touchable when the user holds the terminal device with one hand; generating a second target trajectory which is the nearest touchable when the user holds the terminal device with one hand according to the position coordinates of the plurality of guide points which are the nearest touchable when the user holds the terminal device with one hand,; and determining an annular area formed between the first target trajectory and the second target trajectory as the valid input area when the user holds the terminal device with one hand.

It should be noted that when the display mode of the terminal device is a portrait display mode, the user can be guided to hold the terminal device with both hands, so as to determine the invalid input area and the valid input area when the user holds the terminal device with both hands, which is convenient to enable adaptive invalid input areas and valid input areas for different holding modes, to improve the accidental-touch prevention performance. When the display mode of the terminal device is a landscape display mode, the user can be guided to hold the terminal device with his/her right hand, left hand or both hands, so as to determine the invalid input area and the valid input area when the user holds the terminal device with his/her right hand, left hand or both hands in the landscape display mode, which is convenient to enable adaptive invalid input areas and valid input areas for the landscape display mode, portrait display mode or different holding modes, to improve the accidental-touch prevention performance. When the display mode of the terminal device is a portrait display mode or a landscape display mode, the user can be guided to establish the invalid input area and the valid input area when the user holds the terminal device with his/her right hand, left hand or both hands for different applications, which is convenient to enable adaptive invalid input areas and valid input areas for the landscape display mode, portrait display mode, different holding modes or different applications, to improve the accidental-touch prevention performance. It can be understood that a specific process of establishing the invalid input area and the valid input area for a landscape display mode, a portrait display mode, different holding modes, different applications or different display pages may refer to the process of establishing the invalid input area and the valid input area when holding the terminal device with one hand, which will not be repeated here.

In an embodiment, as shown in Fig. 8, step S102 includes sub-steps of S1021 to S1023.

At S1021, current operating state information of the terminal device is acquired.

The current operating state information includes at least one of a current holding mode in which the user holds the terminal device, a current operating time period, a current operating application of the terminal device, a current display mode of the display apparatus or a current display page. The current display mode of the display apparatus includes any one of a portrait display mode and a landscape display mode. The current holding mode of the terminal device includes any one of a one-hand holding mode and a two-hand holding mode, and the one-hand holding mode includes any one of a right-hand holding mode and a left-hand holding mode.

In an embodiment, the current display mode of the display apparatus of the terminal device may be determined according to a direction sensor or a gyroscope, and the current holding mode in which the user holds the terminal device may be determined based on sides of the frame of the terminal device held by the user and a number of pressing points on the sides of the frame held by the user. For example, when it is detected that the number of pressing points on at least three sides of the frame of the terminal device is greater than or equal to a first preset number, the current holding mode in which the user holds the terminal device is determined to be a two-hand holding mode. When the terminal device is in a portrait display mode, if a number of pressing points on a left side of the frame of the terminal device is more than that on a right side of the frame, the current holding mode in which the user holds the terminal device is determined to be a right-hand holding mode. On the contrary, if the number of pressing points on the left side of the frame is less than that on the right side of the frame, the current holding mode in which the user holds the terminal device is determined to be a left-hand holding mode. When the terminal device is in the landscape display mode, if a number of pressing points on an upper side of the frame of the terminal device is more than that on a lower side of the frame and a holding position is located at a left end of the terminal device, the current holding mode in which the user holds the terminal device is a left-hand holding mode. On the contrary, if a number of pressing points on the upper side of the frame is more than that on the lower side of the frame and a holding position is located at a right end of the terminal device, the current holding mode in which the user holds the terminal device is determined to be a right-hand holding mode.

At S1022, a target invalid input area and a target valid input area corresponding to the current operating state information are determined.

Pre-stored operating state information and a mapping relationship between the target invalid input area and the target valid input area are acquired; and according to the mapping relationship and the current operating state information, the target invalid input area and the target valid input area of the display apparatus are determined. The operating state information and the mapping relationship between the target invalid input area and the target valid input area are pre-established and stored in the terminal device. A specific process of establishing the invalid input area and the valid input areas for different holding modes, different applications, different time periods or different display pages may refer to the previous embodiments, which will not be repeated here. The target invalid input area and the target valid input area can be accurately and quickly determined through the mapping relationship. In addition, the invalid input area and the valid input area of the display apparatus can be adapted for different holding modes, different applications, different time periods or different display pages, so the accidental-touch prevention performance can be greatly improved.

For example, the target invalid input area and the target valid input area of the display apparatus corresponding to an operation time period from 9: 00 to 18: 00 of the terminal device are an invalid input area A and a valid input area B respectively, the target invalid input area and valid input area of the display apparatus corresponding to an operation time period from 18: 00 to 20: 00 of the terminal device are an invalid input area C and a valid input area D respectively, and the target invalid input area and the valid input area of the display apparatus corresponding to an operation time period from 20: 00 to 24: 00 of the terminal device are an invalid input area E and a valid input area F respectively.

In an embodiment, when there is a first touch operation and a second touch operation in the multi-touch operation, position information of touch points on the display apparatus of the multi-touch operation is stored as a piece of touch habit data. When a number of pieces of stored touch habit data is greater than or equal to a preset number, the invalid input area and the valid input area of the display apparatus are updated according to all stored touch habit data. A specific process of updating the invalid input area and the valid input area of the display apparatus may refer to the process of establishing the invalid input area and the valid input area of the display apparatus according to the touch habit data in the previous example, which will not be repeated here. The preset number may be set according to an actual situation, which is not specifically limited in the embodiment of the present application. For example, the preset number may be set to 100. The invalid input area and valid input area are updated to make accidental-touch prevention more accurate.

In an embodiment, when a touch operation is detected in the invalid input area of the display apparatus after the first touch operation is discarded, current operating state information of the terminal device is acquired. Target touch habit data is acquired from all stored touch habit data according to the current operating state information, and the invalid input area and the valid input area of the display apparatus are updated according to the target touch habit data. The invalid input area and the valid input area of the display apparatus are updated by means of the target touch habit data, so the accuracy of accidental-touch prevention is improved.

At S1023, whether there is a first touch operation in the target invalid input area and a second touch operation in the target valid input area in the multi-touch operation is determined.

In some examples, position information of touch points on the display apparatus of the multi-touch operation is acquired. According to the position information, whether there is a first touch operation in a target invalid input area and a second touch operation in a target valid input area in the multi-touch operation is determined, that is, according to the position information, whether there are touch points in both the target invalid input area and the target valid input area is determined. If there are touch points in both the target invalid input area and the target valid input area, it is determined that there is the first touch operation and the second touch operation in the multi-touch operation.

At S103, when there is the first touch operation and the second touch operation in the multi-touch operation, the first touch operation is discarded, and in response to the second touch operation, the terminal device is controlled to execute a corresponding action.

The first touch operation is a valid touch operation, and the second touch operation is an invalid touch operation.

In an embodiment, when it is determined that there is the first touch operation and the second touch operation in the multi-touch operation, the first touch operation is discarded, and in response to the second touch operation, the terminal device is controlled to execute a corresponding action. The corresponding action executed by the terminal device may be, such as clicking to open an application, or entering characters. By discarding the second touch operation with accidental touch and executing the first control operation without accidental touch, the terminal device is prevented from executing an accidental touch operation, greatly improving the intelligence of the terminal device. It should be noted that there is not only one touch point in the first touch operation, but there may be a plurality of touch points in the first touch operation.

The accidental-touch prevention method provided by the above embodiment includes: monitoring a multi-touch operation received on a display apparatus, determining whether there is a first touch operation in an invalid input area of the display apparatus and a second touch operation in a valid input area of the display apparatus in the multi-touch operation, when there is the first touch operation and the second touch operation in the multi-touch operation, discarding the first touch operation, and in response to the second touch operation, controlling the terminal device to execute a corresponding action, so that the terminal device is controlled to execute a corresponding action in response to a non-accidental touch operation while being prevented from executing an accidental touch operation, greatly improving the accidental-touch prevention performance of the terminal device and improving the user experience.

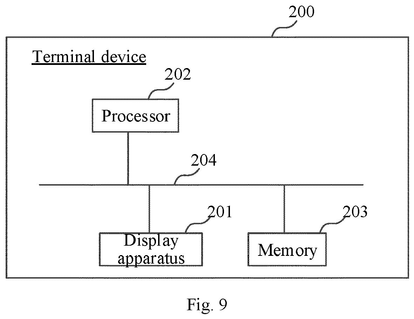

Referring to Fig. 9, which is a schematic block diagram of a structure of a terminal device provided by an embodiment of the present application.

As shown in Fig. 9, the terminal device 200 includes a display apparatus 201, a processor 202 and a memory 203. The display apparatus 201, the processor 202 and the memory 203 are connected by a bus 204. The bus 204, for example, is an Inter-integrated Circuit (I2C) bus.

The processor 202 is configured to provide computing and control capabilities to support the operation of the entire terminal device. The processor 202 may be a Central Processing Unit (CPU), or other general-purpose processors, Digital Signal Processor (DSP), Application Specific Integrated Circuit (ASIC), Field-Programmable Gate Array (FPGA) or other programmable logic devices, discrete gate or transistor logic devices, discrete hardware components, and the like. The general-purpose processor may be a microprocessor or any conventional processor or the like.

The display apparatus 201 is configured to display pictures, and may be further configured to receive an input touch operation of a user. The display apparatus 201 may be a touchscreen.

The memory 203 may be a Flash chip, a Read-Only Memory (ROM) disk, a compact disc, a USB flash disk or a mobile hard disk.

Those having ordinary skill in the art can understand that the structure shown in Fig. 9 is only a block diagram of some structures related to the scheme of the present application, and does not constitute a limitation to the terminal device to which the scheme of the present application is applied, and the server may include more or fewer components than shown in the figure, or combinations of some components, or different component arrangements.

The processor is configured to run a computer program stored in the memory, and implement any one of the accidental-touch prevention methods provided by the embodiments of the present application when executing the computer program.

In an implementation, the processor is configured to run a computer program stored in a memory, and implement the following steps when executing the computer program:
monitoring a multi-touch operation received on a display apparatus;
determining whether there a first touch operation in an invalid input area of the display apparatus and a second touch operation in a valid input area of the display apparatus in the multi-touch operation; and
when there is the first touch operation and the second touch operation in the multi-touch operation, discarding the first touch operation, and in response to the second touch operation, controlling the terminal device to execute a corresponding action.

In an embodiment, the processor is further configured to implement following steps:
acquiring touch habit data of a user, where the touch habit data includes position information of touch points on the display apparatus of the multi-touch operation input by the user for many times; and
establishing an invalid input area and a valid input area of the display apparatus according to the touch habit data.

In an embodiment, when implementing that the touch habit data includes the operating state information of the terminal device and the position information of the touch points on the display apparatus of the multi-touch operation input by a user for many times and establishing an invalid input area and a valid input area of the display apparatus according to the touch habit data, the processor is configured to implement:
establishing an invalid input area and a valid input area corresponding to the operating state information according to the operating state information of the terminal device and the position information of the touch points on the display apparatus of the multi-touch operation input by a user for many times.

The operating state information includes at least one of a holding mode in which the user holds the terminal device, an operating time period, an operating application of the terminal device, a display mode of the display apparatus or a display page.

In an embodiment, when determining whether there is a first touch operation in an invalid input area of the display apparatus and a second touch operation in a valid input area of the display apparatus in the multi-touch operation, the processor is configured to implement:
acquiring current operating state information of the terminal device;
determining a target invalid input area and a target valid input area corresponding to the current operating state information; and
determining whether there is a first touch operation in the target invalid input area and a second touch operation in the target valid input area in the multi-touch operation.

In an embodiment, when establishing a valid input area of the display apparatus according to the touch habit data, the processor is configured to implement following steps:
determining a reference touch point, acquiring a target position coordinate of the reference touch point, and acquiring position coordinates of touch points in the preset valid input area of the display apparatus from the touch habit data;
determining a distance between each touch point in the preset valid input area and the reference touch point according to the target position coordinate and the position coordinates of the touch points in the preset valid input area;
determining a first preset number of first touch points and a second preset number of second touch points according to the distance between each touch point in the preset valid input area and the reference touch point, where a distance between the first touch point and the reference touch point is larger than a distance between the second touch point and the reference touch point;
generating a first trajectory which is the farthest touchable when a user holds the terminal device according to position coordinates of the first preset number of first touch points, where at least half of the first preset number of first touch points are located on the first trajectory;
generating a second trajectory which is the nearest touchable when the user holds the terminal device according to position coordinates of the second preset number of second touch points, where at least half of the second preset number of second touch points are located on the second trajectory; and
determining an annular area formed between the first trajectory and the second trajectory as the valid input area of the display apparatus.

In an embodiment, when establishing the invalid input area of the display apparatus according to the touch habit data, the processor is configured to implement:
determining a reference touch point, acquiring a target position coordinate of the reference touch point, and acquiring position coordinates of third touch points in a preset invalid input area of the display apparatus from the touch habit data;
generating a third trajectory for the user to touch the preset invalid input area according to the position coordinate of each third touch point, where at least half of the third touch points are located on the third trajectory; and
determining a sector area formed by the third trajectory and each side of the frame of the terminal device as the invalid input area of the display apparatus.

In an embodiment, the processor is further configured to implement:
when there is the first touch operation and the second touch operation in the multi-touch operation, storing position information of the touch points on the display apparatus of the multi-touch operation as a piece of touch habit data; and
when a number of pieces of stored touch habit data is greater than or equal to a preset number, updating the invalid input area and the valid input area of the display apparatus according to all the stored touch habit data.

In an embodiment, after storing the position information of the touch points on the display apparatus of the multi-touch operation as a piece of touch habit data, the processor is further configured to implement:
acquiring current operating state information of the terminal device when the touch operation is detected in the invalid input area of the display apparatus after the first touch operation is discarded; and
acquiring target touch habit data from all stored touch habit data according to the current operating state information, and updating the invalid input area and the valid input area of the display apparatus according to the target touch habit data.

It should be noted that those having ordinary skill in the art can clearly understand that, for the convenience and conciseness of the description, the specific operating process of the above-described terminal device can refer to the corresponding process in the aforementioned embodiment of the accidental-touch prevention method, which will not be repeated here.

An embodiment of the present application further provides a storage medium configured for computer readable storage and storing one or more programs which, when executed by one or more processors, cause the one or more processors to implement the steps of any one of the accidental-touch prevention methods provided in the Description of the present application.

The storage medium may be an internal storage unit of the terminal device described in the previous embodiment, such as a hard disk or memory of the terminal device. The storage medium may also be an external storage device of the terminal device, such as a plug-in hard disk equipped on the terminal device, a Smart Media Card (SMC), a Secure Digital (SD) card, a Flash Card, and the like.

Embodiments of the present application provide an accidental-touch prevention method, a terminal device and a storage medium. The accidental-touch prevention method provided by the embodiment of the present application includes monitoring a multi-touch operation received on a display apparatus, determining whether there is a first touch operation in an invalid input area of the display apparatus and a second touch operation in a valid input area of the display apparatus in the multi-touch operation, when there is the first touch operation and the second touch operation in the multi-touch operation, discarding the first touch operation, and in response to the second touch operation, controlling the terminal device to execute a corresponding action, so that the terminal device is controlled to execute a corresponding action in response to a non-accidental touch operation while being prevented from executing an accidental touch operation, thereby greatly improving the accidental-touch prevention performance of the terminal device and improving the user experience.

As will be understood by those having ordinary skill in the art that all or some of the steps, systems and functional modules/units in the devices disclosed above may be implemented as software, firmware, hardware and appropriate combinations thereof. In the hardware implementation, the division between functional modules/units mentioned in the above description does not necessarily correspond to the division of physical components. For example, a physical component may have multiple functions, or a function or step may be cooperatively performed by multiple physical components. Some or all of the physical components may be implemented as software executed by a processor, such as a central processing unit, a digital signal processor or a microprocessor, or as hardware, or as an integrated circuit, such as an application specific integrated circuit. Such software may be distributed on a computer-readable medium, and the computer-readable medium may include a computer storage medium (or a non-transitory medium) and a communication medium (or a transitory medium). As is well known to those having ordinary skill in the art, the term computer storage medium includes volatile and nonvolatile, removable and non-removable media implemented in any method or technology for storing information such as computer readable instructions, data structures, program modules or other data. A computer storage medium may include, but not limited to, RAM, ROM, EEPROM, flash memory or other memory technologies, CD-ROM, digital versatile disk (DVD) or other optical disk storage, magnetic cassette, magnetic tape, magnetic disk storage or other magnetic storage devices, or any other media that can be used to store desired information and can be accessed by a computer. In addition, it is well known to those having ordinary skill in the art that the communication medium may generally include computer readable instructions, data structures, program modules or other data in a modulated data signal such as a carrier wave or other transmission mechanism, and may include any information delivery medium.

It should be understood that the term "and/or" used in the Description and appended claims of the present application refers to any combination and all possible combinations of one or more of the associated items listed, and includes these combinations. It should be noted that terms of "comprise", "include" or any other variant herein are intended to cover non-exclusive inclusion, so that a process, a method, an article or a system which includes a series of elements not only includes such elements, but also includes other elements not listed clearly or also includes inherent elements in the process, the method, the article or the system. Under the condition of no more limitation, the elements defined by a sentence "include one..." do not exclude additional identical elements in the process, the method, the article or the system which includes the elements.

The above-mentioned serial numbers of the embodiments of the present application are for description only, and do not represent the advantages and disadvantages of the embodiments. The above only describes specific embodiments of the present application, but the protection scope of the present application is not limited thereto. Various equivalent modifications or replacements can be easily contemplated by those having ordinary skill in the art within the technical scope disclosed by the present application and should be covered by the protection scope of the present application. Therefore, the protection scope of the present application should be subject to the protection scope of the claims.

## Claims

1. An accidental-touch prevention method, applied to a terminal device comprising a display apparatus, the method comprising:
monitoring a multi-touch operation received on the display apparatus;
determining whether a presence of a first touch operation in an invalid input area of the display apparatus and a presence of a second touch operation in a valid input area of the display apparatus in the multi-touch operation; and
in response to the presence of the first touch operation and the second touch operation in the multi-touch operation, discarding the first touch operation, and in response to the second touch operation, controlling the terminal device to execute a corresponding action.

2. The accidental-touch prevention method of claim 1, further comprising:
acquiring touch habit data of a user, wherein the touch habit data comprises position information of touch points on the display apparatus of the multi-touch operation input by the user for many times; and
establishing the invalid input area and the valid input area of the display apparatus according to the touch habit data.

3. The accidental-touch prevention method of claim 2, wherein the touch habit data comprises operating state information of the terminal device and the position information of touch points on the display apparatus of the multi-touch operation input by the user for many times, establishing the invalid input area and the valid input area of the display apparatus according to the touch habit data comprises:
establishing the invalid input area and the valid input area corresponding to the operating state information according to the operating state information of the terminal device and the position information of the touch points on the display apparatus of the multi-touch operation input by the user for many times;
wherein the operating state information comprises at least one of a holding mode in which the user holds the terminal device, an operating time period, an operating application of the terminal device, a display mode of the display apparatus or a display page.

4. The accidental-touch prevention method of claim 3, wherein determining whether a presence of a first touch operation in an invalid input area of the display apparatus and a presence of a second touch operation in a valid input area of the display apparatus in the multi-touch operation comprises:
acquiring current operating state information of the terminal device;
determining a target invalid input area and a target valid input area corresponding to the current operating state information; and
determining whether a presence of a first touch operation in the target invalid input area and a presence of a second touch operation in the target valid input area in the multi-touch operation.

5. The accidental-touch prevention method of claim 2, wherein establishing the valid input area of the display apparatus according to the touch habit data comprises:
determining a reference touch point, acquiring a target position coordinate of the reference touch point, and acquiring position coordinates of touch points in a preset valid input area of the display apparatus from the touch habit data;
determining a distance between each touch point in the preset valid input area and the reference touch point according to the target position coordinate and the position coordinates of the touch points in the preset valid input area;
determining a first preset number of first touch points and a second preset number of second touch points according to the distance between each touch point in the preset valid input area and the reference touch point, wherein a distance between the first touch point and the reference touch point is larger than a distance between the second touch point and the reference touch point;
generating a first trajectory which is the farthest touchable when the user holds the terminal device according to position coordinates of the first preset number of the first touch points, wherein at least half of the first preset number of the first touch points are located on the first trajectory;
generating a second trajectory which is the nearest touchable when the user holds the terminal device according to position coordinates of the second preset number of the second touch points, wherein at least half of the second preset number of the second touch points are located on the second trajectory; and
determining an annular area formed between the first trajectory and the second trajectory as the valid input area of the display apparatus.

6. The accidental-touch prevention method of claim 2, wherein establishing the invalid input area of the display apparatus according to the touch habit data comprises:
determining a reference touch point, acquiring a target position coordinate of the reference touch point, and acquiring position coordinates of third touch points in a preset invalid input area of the display apparatus from the touch habit data; and
generating a third trajectory for the user to touch the preset invalid input area according to the position coordinate of each third touch point, wherein at least half of the third touch points are located on the third trajectory; and
determining a sector area formed by the third trajectory and each side of a frame of the terminal device as the invalid input area of the display apparatus.

7. The accidental-touch prevention method of any one of claims 1-6, wherein the method further comprises:
in response to the presence of the first touch operation and the second touch operation in the multi-touch operation, storing position information of the touch points on the display apparatus of the multi-touch operation as a piece of touch habit data; and
in response that a number of stored touch habit data is greater than or equal to a preset number, updating the invalid input area and the valid input area of the display apparatus according to all the stored touch habit data.

8. The accidental-touch prevention method of claim 7, wherein after storing the position information of the touch points on the display apparatus of the multi-touch operation as a piece of touch habit data, the method further comprises:
acquiring current operating state information of the terminal device in response to detecting a touch operation in the invalid input area of the display apparatus after the first touch operation is discarded; and
acquiring target touch habit data from all stored touch habit data according to the current operating state information, and updating the invalid input area and the valid input area of the display apparatus according to the target touch habit data.

9. A terminal device, comprising a display apparatus, a processor, a memory, a computer program stored in the memory and executable by the processor, and a data bus configured to implement connection communication between the processor and the memory, wherein the computer program, when executed by the processor, causes the processor to carry out the accidental-touch prevention method of any one of claims 1-8.

10. A storage medium configured for computer readable storage and storing one or more programs, wherein the one or more programs, when executed by one or more processors, cause the one or more processors to carry out the accidental-touch prevention method of any one of claims 1-8.
